(19) Europäisches Patentamt
European Patent Office
Office européen des brevets

(11) **EP 2 246 368 A1**

(12) **EUROPEAN PATENT APPLICATION**

(43) Date of publication:
**03.11.2010 Bulletin 2010/44**

(51) Int Cl.:
***C08F 4/655*** (2006.01)     ***C08F 210/16*** (2006.01)

(21) Application number: **09159141.2**

(22) Date of filing: **30.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Borealis AG**
**1220 Vienna (AT)**

(72) Inventors:
• **Garoff, Thomas**
  **00840, Helsinki (FI)**
• **Waldvogel, Päivi**
  **06450, Porvoo (FI)**
• **Kallio, Kalle**
  **06400, Porvoo (FI)**
• **Eriksson, Virginie**
  **00810, Helsinki (FI)**

(74) Representative: **Kador & Partner**
**Corneliusstrasse 15**
**80469 München (DE)**

(54) **Improved ethylene polymerization catalyst composition**

(57)    Ziegler-Natta catalyst composition capable of producing ethylene/alpha-olefins copolymers, particularly linear low density polyethylene; the composition having an improved stability of its behaviour during polymerization in respect to time.

The Ziegler-Natta catalyst composition comprises:

A) a procatalyst, which procatalyst comprises

a) an Al compound having the formula $Al(alkyl)_xCl_{3-x}$ (I), where alkyl is an alkyl group with 1 to 12 and $0 \leq x \leq 3$,

b) a magnesium hydrocarbyloxy compound of formula $Mg(OR^1)_{2-n}(R^2)_n$ (II), wherein each $R^1$ and $R^2$ is independently a $C_{1-20}$ hydrocarbon residue which may optionally be substituted with halogen and $0 \leq n < 2$ and

c) a chlorine-containing titanium compound of the formula $Cl_yTi(OR^3)_{4-y}$ (III), wherein $R^3$ is a $C_{2-20}$ hydrocarbon residue and y is 1, 2, 3 or 4,

with compounds a), b) and c) being supported on a particulate inorganic carrier and

B) a halogenated aluminium alkyl cocatalyst of the formula (IV) $(C_1-C_3-alkyl)_m-Al-X_{3-m}$, wherein X is chlorine, bromine, iodine or fluorine and m is 1 or 2,

whereby the composition shows a reduced change of comonomer response with polymerization time compared to compositions using non-halogenated cocatalysts.

EP 2 246 368 A1

**Description**

The invention relates to a Ziegler-Natta catalyst composition which is suitable for the production of ethylene polymers, particularly linear low density polyethylene.

More specifically, the present invention relates to a Ziegler-Natta catalyst composition capable of producing ethylene/alpha-olefins copolymers, particularly linear low density polyethylene, and the composition having an improved stability of its behaviour during polymerization in respect to time. The composition comprises a mixture containing a group 13 metal, chlorine, magnesium and titanium atoms, supported on a particulate inorganic carrier and a halogenated aluminium alkyl as cocatalyst.

Ethylene, alone or with other olefinic unsaturated monomers are frequently polymerized in the presence of catalyst compositions, which have essentially two components: a compound of a transition metal belonging to any of groups 4 to 6 of the Periodic Table of Elements (IUPAC 2007) which is often called a procatalyst, and a compound of a metal belonging to groups 1, 2 or 13 of said Table which is the s.c. cocatalyst. This kind of Ziegler-Natta catalyst composition has been further developed by depositing the procatalyst on a less or more inert and particulate support and by adding to the catalyst composition in the stages of its preparation several additives, among others electron donating compounds.

Various Ziegler-Natta catalyst compositions have already been examined to manufacture LLDPE.

US 4,218,339 discloses catalyst components for the polymerization of olefins obtained by reacting a Mg compound, preferably a Mg halide with an oxygen containing compound of a metal M selected from Ti, V or Zr and then by contacting the so obtained product with a compound, or a mixture of compounds in order to explicate on said reaction product a halogenating and reducing action. The said catalyst components are transformed in active catalysts for the polymerization of olefins by reaction with aluminium trialkyl, in particular triisobutyl aluminium. Although generically stated that the catalysts are active also in the copolymerization of ethylene with alpha olefins, their use and effectiveness in this type of polymerization is not reported.

EP 0 155 682 discloses catalyst components comprising a) an Al-alkyl compound as cocatalyst, b) an external donor containing at least a nitrogen atom and c) a solid procatalyst comprising a titanium compound supported on an anhydrous magnesium halide, which are suitable for the preparation of LLDPE polymers. Comparing Example 11 and Comparative Example 7 it can be clearly seen that said catalyst components are endowed with a good capability of distributing the comonomer only when specific nitrogen containing external donors are used together with an aluminium trialkyl. The presence of nitrogen containing external donor has two negative effects: it may decrease the activity of the catalyst and increases the cost of the catalyst. No mention is made of the possibility of using a halogenated aluminium alkyl as cocatalyst.

WO 03/055921 discloses catalyst components that are particularly suitable for the preparation of LLDPE polymers which comprise (I) a solid pro-catalyst comprising Mg, Ti, Cl, and OR groups, where R is a $C_1$-$C_{10}$-alkyl group optionally containing heteroatoms, in which the Ti/Mg weight ratio is from 2 to 6. 5, the Cl/Ti weight ratio is from 1.5 to 3. 5 and the OR/Ti weight ratio is from 0.7 to 2.5 and at least 50% of the titanium atoms are in a valence state lower than 4 and (II) an alkyl aluminium halide as cocatalyst. The alkyl aluminium halide is suitably selected among alkyl aluminium chlorides and in particular among diethyl aluminium chloride, diisobutyl aluminium chloride, Al-sesquichloride and dimethyl aluminium chloride. Dimethyl aluminium chloride is especially preferred.

The solid procatalyst (I) can be prepared according to the general disclosure of US 4,218,339 for example by reacting $MgCl_2$, $Ti(OBu)_4$, polymethylhydrosiloxane and $SiCl_4$. According to WO 03/055921 such catalyst components show good comonomer distribution in the preparation of LLDPE.

EP 0 435 557 discloses an olefin polymerization catalyst composition which is prepared by a) contacting a solution of a magnesium compound, such as $MgCl_2$, in an electron donor compound, preferably tetrahydrofuran, with a titanium compound, b) contacting the solution resulting from step a) with a solid, inert porous carrier to form a catalyst precursor and c) contacting the precursor with dimethyl aluminium chloride (DMAC). It is stated in EP 0 435 557 that the use of DMAC as the activator for the precursor composition instead of triethyl aluminium (TEAL), commonly used in alpha-olefin polymerization reactions, produces LLDPE having substantially more uniform distribution of side chain branches among the polymer molecules.

WO 2004/050722 describes a Ziegler-Natta catalyst system comprising a procatalyst which comprises an inorganic support, a magnesium compound, a titanium compound and optionally a chlorine compound on said support and a cocatalyst which is a mixture of at least two organometallic compounds of the formula $R_3Al$ where R can be the same or different and is a $C_1$ to $C_{20}$ alkyl group or isoprenyl group, said R optionally being substituted by one or more halogen or hetero atom.

Preferably the cocatalyst is a mixture of compounds selected from the group consisting of tri-$C_1$-$C_{10}$ alkyl aluminium compounds, where one of the components contains short-chained alkyl groups having 1-3 carbon atoms and the other component contains long-chained alkyl groups having 4-10 carbon atoms.

According to WO 2004/050722 this system is capable to produce ethylene copolymers with a high degree of homogeneity and to control the molecular weight distribution of the polymer produced, at least in the case where one compound of the cocatalyst mixture is isoprenyl aluminium.

According to WO 95/25758 a Ziegler-Natta procatalyst, capable of producing ethylene copolymers, is activated with an cocatalyst comprising an organohalogenous compound of a metal of group 2 or 13 of the Periodic Table of Elements (IUPAC 2007) which is prepared by reacting an organic compound of the metal of group 2 or 13 and a catalytically non-toxic halogen compound during copolymerization or not earlier than 3 hours before copolymerization.

The procatalyst preferably contains a reaction product of a titanium tetraalkoxid with a compound that chlorinates it, such as an aluminium alkyl chloride. Besides this reaction product the procatalyst may contain magnesium compounds promoting catalytic activity, among which magnesium dihalogenides, especially magnesium dichloride are particularly advantageous. In addition, the procatalyst can also contain an inorganic oxide carrier and optionally an internal electron donor.

The essential feature of the catalyst composition described in WO 95/25758 is the use of a "fresh" cocatalyst or even one prepared in situ during copolymerization in order to yield alpha-olefin comonomer distribution as regular as possible for the ethylene copolymer.

The cocatalyst is prepared by reacting a compound of the formula $R_nM$, preferably triethyl aluminium (TEAL) with the catalytically non-toxic halogen compound, preferably ethyl aluminium sesquichloride in situ during copolymerization or not earlier than 3 hours before copolymerization.

From Examples 6 to 8 of WO 95/25758 it can be seen that the "fresh" cocatalyst as claimed in WO 95/25758, prepared 30 minutes before use in the polymerization of an ethylene/1-hexene copolymer, yields the highest and narrowest peak in the area of linear low-density polyethylene fraction. Furthermore it can be seen that as a matter of time, the proportion of detrimental, very low-density polyethylene fraction grows, the growth also appearing as a lower average density of the polymer product. This copolymer portion is apparently sticky and causes problems in the process and end product by effecting the mechanical properties.

It is known in the state of the art and also described in WO 95/25758, that Ziegler-Natta catalyst compositions tend to change their behaviour during the polymerization process in respect of time ("time-drift"), which has a huge impact on polymer properties and polymer homogeneity.

For example, such catalyst compositions show a change of comonomer response with time, leading to a remarkable drop in comonomer incorporation during the first phase of the polymerization. This further leads to an increase of density in the course of the copolymerization.

A further disadvantage is that using common Ziegler-Natta catalyst compositions often leads to a remarkable decrease of the melt flow rate (MRF), respectively increase of the molecular weight in the first phase of copolymerization.

This s.c. "time -drift" in catalyst behaviour causes even more problems if the polymerization process is a continuous multi stage process, where residence time distribution combined with the "time-drift" problem can lead to further inhomogeneity of the polymer produced. For example, it can happen that catalyst particles that stayed a longer time in the first reactor may have very low comonomer response in the second reactor where copolymerization is usually performed. In the worst case polymer particles are produced containing a lot of comonomer and on the other hand polymer particles containing virtually no comonomer at all are yielded.

It is thus an object of the present invention to provide a Ziegler-Natta catalyst composition for the copolymerization of ethylene with one or more other alpha-olefin comonomer units, which is stable in its behaviour in respect of polymerization time, leading to a "more or less" constant comonomer incorporation and "more or less" constant MFR through copolymerization.

It has now surprisingly been found that these object is achieved by a Ziegler-Natta catalyst composition comprising a special procatalyst containing a group 13 metal, chlorine, magnesium and titanium atoms, supported on a particulate inorganic carrier and a halogenated aluminium alkyl as cocatalyst.

Therefore, the present invention provides a Ziegler-Natta catalyst composition for the production of ethylene copolymers comprising

A) a procatalyst, which procatalyst comprises

a) an Al compound having the formula $Al(alkyl)_xCl_{3-x}$ (I), where alkyl is an alkyl group with 1 to 12 and $0 \leq x \leq 3$,

b) a magnesium hydrocarbyloxy compound of formula $Mg(OR^1)_{2-n}(R^2)_n$ (II), wherein each $R^1$ and $R^2$ is independently a $C_{1-20}$ hydrocarbon residue which may optionally be substituted with halogen and $0 \leq n < 2$ and

c) a chlorine-containing titanium compound of the formula $Cl_yTi(OR^3)_{4-y}$ (III), wherein $R^3$ is a $C_{2-20}$ hydrocarbon residue and y is 1, 2, 3 or 4, with compounds a), b) and c) being deposited on a particulate inorganic support and

B) a halogenated aluminium alkyl cocatalyst of the formula (IV) $(C_1\text{-}C_4\text{-alkyl})_m\text{-Al-}X_{3-m}$, wherein X is chlorine, bromine, iodine or fluorine and m is 1 or 2, whereby the composition shows a reduced change of comonomer response with polymerization time compared to compositions using non-halogenated cocatalysts.

In a further embodiment the Ziegler-Natta catalyst composition shows a reduced change of molecular weights Mw and Mn with polymerization time compared to compositions using non-halogenated cocatalysts.

It has been found that the catalyst composition of the invention shows an almost constant behaviour over the polymerization time in regard to comonomer response, which leads to a "more or less" constant comonomer incorporation and "more or less" constant MFR trough the copolymerization procedure. Furthermore the molecular weights Mw and Mn of the produced polymer are "more or less" constant over the polymerization time.

The catalyst composition of the invention thus does not show a remarkable "time -drift" in its behaviour during the polymerization process which leads to a high degree of homogeneity of the produced ethylene copolymer.

The procatalyst (A) of the catalyst composition according to the invention comprises a reaction product (i) of a) an alkyl aluminium chloride, which is an internal soluble chlorination agent and which also has a co-catalytically impact, b) a soluble magnesium hydrocarbyloxy compound (named hereafter a magnesium complex) and c) a titanium compound which contains chlorine.

The catalyst components a), b) and c) are deposited on a suitable inorganic catalyst support to give said procatalyst (A).

There are two possible ways for depositing the catalyst components on a suitable inorganic catalyst support, i.e. by sequentially contacting the support with the above mentioned compounds, as described in EP 0 688 794 or EP 0 835 887, or by first preparing a solution from the components a), b) and c) and then contacting the solution with a support, as described in WO 01/55230, all of which are herein fully incorporated by reference.

Variant I, according to EP 0 688 794 or EP 0 835 887, comprises the following steps:

- the inorganic support is contacted with the alkyl aluminium chloride a) to give a first reaction product,
- the first reaction product is contacted with the magnesium complex b) to give a second reaction product,
- the second reaction product is contacted with the titanium compound c) to give said procatalyst.

Variant II, according to WO 01/55230, comprises the following steps:

- reacting the magnesium complex b) with the alkyl aluminium chloride a) in a non polar hydrocarbon solvent in which said magnesium complex is soluble to produce a first solution
- contacting said first solution with the titanium compound c) to produce a second solution and
- contacting said second solution with the inorganic support to give said procatalyst (A).

Preferably the procatalyst used according to the invention is prepared according to variant I.

The procatalyst used according to the invention comprises catalyst components a), b) and c).

Catalyst component a) is an aluminium compound of the formula $Al(alkyl)_xCl_{3-x}$ (I), wherein alkyl is an alkyl group of 1 to 12 C-atoms, preferably 1 to 8 C-atoms, more preferably 1 to 6 C-atoms and $0 \leq x \leq 3$, preferably x is 1 or 2.

The alkyl group can be linear, branched or cyclic, or a mixture of such groups.

Suitable aluminium compounds are for example dimethyl aluminium chloride, diethyl aluminium chloride, diisobutyl aluminium chloride, ethyl aluminium dichloride, methyl aluminium dichloride and triethylaluminium or mixtures therefrom.

Preferably used as catalyst component a) are alkyl aluminium dichlorides, more preferably ethyl aluminium dichloride (EADC).

The magnesium complex b) of formula $Mg(OR^1)_{2-n}(R^2)_n$ (II) used in the procatalyst synthesis is totally soluble in non-polar hydrocarbon solvents.

In the formula (II) each $R^1$ and $R^2$ is independently a $C_{1-20}$ hydrocarbon residue, e.g. a $C_{2-15}$ group, preferably $C_{3-10}$ group, such as $C_{4-8}$ group, e.g. linear, cyclic or branched alkyl, aryl, aralkyl or alkaryl, suitably a linear or branched alkyl, preferably a branched alkyl, such as 2-ethyl-1-hexyl, or ethyl, propyl, butyl, pentyl, hexyl, heptyl, octyl, which may optionally be substituted with halogen and $0 \leq n < 2$.

Said magnesium complex may be commercially available or, preferably, can be prepared by reaction of a magnesium dihydrocarbyl (e.g. dialkyl) compound of the formula $Mg(R^2)_2$ wherein each $R^2$ is independently as defined above with an alcohol $R^1OH$, wherein $R^1$ is as defined above.

Preferred magnesium dialkyl starting compounds include dibutyl magnesium, butyl ethyl magnesium or butyl octyl magnesium. More preferably butyl octyl magnesium (BOMAG) is used.

Suitable alcohols include octanol, hexanol, butanol, 2-ethyl-1-hexanol, 2-propyl-pentanol and 2-methyl-1-pentanol. More preferably 2-ethyl-1-hexanol is used.

The magnesium dialkyl/alcohol molar ratio is from 1:1 to 1:4, preferably from 1:1.5 to 1:3.5, more preferably from 1:1.7 to 1:2.0.

The reaction of the magnesium dialkyl and the alcohol may take place at any temperature but preferably takes place at a low temperature, e.g. 0-40°C, especially at room temperature.

Component c) is chlorine-containing titanium compound of the formula $ClyTi(OR^3)_{4-y}$ (III), wherein $R^3$ is a $C_{1-20}$ hydrocarbon residue, preferably a $C_{2-10}$ and more preferably a $C_{2-8}$ hydrocarbon residue. y is 1, 2, 3 or 4, preferably 3 or 4 and more preferably 4.

Suitable titanium compounds include trialkoxy titanium monochlorides, dialkoxy titanium dichloride, alkoxy titanium trichloride and titanium tetrachloride. Preferably titanium tetrachloride is used as component c).

In both preparation methods, as described above, the components a), b) and c) may be added in molar ratios known in the art. Generally in the final solid procatalyst, the molar ratio of Mg:Ti can be e.g. between 10:1 to 1:10, preferably 5:1 to 1:1. The molar ratio of Ti:Al can be e.g. between 10:1 to 1:2, e.g. 3:1 to 1:1.

The particulate inorganic support can be an inorganic oxide support, such as silica, alumina, titania, silica-alumina and silica-titania. Preferably, the support is silica.

The surface area, pore volume and particle size of the silica can be chosen according to the requirements of the specific polymerization process, in which the catalysts will be used. Typically, silica particles having a surface area in the range of from about 10 to about 700 $m^2$/g (BET method), pore volume in the range of from about 0.1 to about 6.0 $cm^3$/g and average particle size in the range of from about 10 to about 100 $\mu$m can be used. However, it has turned out that special advantages can be obtained if the support has an average particle size from 15 to 30 $\mu$m, preferably from 18 to 25 $\mu$m.

The silica may be in granular, agglomerated, fumed or other form.

It is further preferred that the support material is calcinated, i.e. heat treated under air and then with a non-reactive gas such as nitrogen. This treatment is preferably done at a temperature in excess of 100°C, more preferably 200°C or higher, e.g. 200-800°C, particularly about 600°C. The calcination treatment is preferably effected for several hours, e.g. 2 to 30 hours, more preferably about 10 hours.

Examples of suitable support materials, which are commercially available, are, for instance, ES747JR, produced and marketed by Ineos Silicas (former Crossfield), and SP9-491, Sylopol 55SJ, produced and marketed by Grace, etc..

A most preferred procatalyst (A) is obtained by a process according to Variant I, as described in EP 0 688 794 or EP 0 835 887, using EADC as catalyst component a), a magnesium complex b) prepared by reacting BOMAG and 2-ethyl-1-hexanol, and titanium tetrachloride as component c), which are deposited on a silica support.

The second component of the Ziegler-Natta catalyst composition is the halogenated aluminium alkyl cocatalyst of formula (IV) $(C_1-C_4\text{-alkyl})_m\text{-Al-X}_{3-m}$, wherein X is chlorine, bromine, iodine or fluorine and m is 1 or 2.

The $C_1-C_4$-alkyl groups can be linear or branched or cyclic, or a mixture of such groups.

X is preferably chlorine or bromine, most preferably X is chlorine.

Suitable cocatalysts are for example dimethyl aluminium chloride (DMAC), diethyl aluminium chloride (DEAC), diisobutyl aluminium chloride (DIBAC), ethyl aluminium dichloride (EADC), methyl aluminium dichloride (MADC).

Preferred cocatalysts according to the invention are EADC or DEAC, which can be used in combination with triethyl aluminium (TEAL) or more preferably alone as a pure cocatalyst.

If EADC or DEAC are used in combination with TEAL the preferred molar ratio for halogenated aluminium alkyl : TEAL is from 5:95 to 95:5, preferably 10:90 to 90:10, more preferably 20:80 to 80:20, and most preferably 50:50.

More preferably used are EADC in combination with TEAL (1:1 mixture) or pure DEAC alone.

Most preferably used is pure DEAC.

The cocatalyst is typically used in excess to the transition metal of the transition metal compound. For instance, the molar ratio of the aluminium in the cocatalyst to the titanium in component c) is from 1 to 500 mol/mol, preferably from 2 to 100 mol/mol, more preferably from 5 to 50 mol/mol and in particular from 10 to 40 mol/mol.

The manner of combining the cocatalyst with the precursor is not critical to the present invention. Thus, the cocatalyst may be combined with the precursor either outside the reaction vessel prior to the polymerization reaction or it can be introduced into the reaction vessel substantially simultaneously with the precursor. Furthermore in multi- e.g. two-reactor systems it is also possible that the cocatalyst is only fed to the second reactor where the copolymerization is performed.

The Ziegler-Natta catalyst composition according to the present invention, comprising a special procatalyst (A) and a halogenated aluminium alkyl as cocatalyst B), shows an improved stability in regard to polymerization time compared to conventional Ziegler-Natta catalyst compositions.

Due to this improved stability a time dependent change of the behavior of the catalyst composition during the polymerization is avoided. The Ziegler-Natta catalyst composition according to the present invention thus shows almost no or little "time-drift" in the comonomer incorporation, further enables the production of polymers with more or less constant molecular weight (or MFR) and density in the course of the polymerization and therefore provides highly homogeneous ethylene copolymers, especially LLDPE.

The Ziegler-Natta catalyst composition according to the present invention is thus especially suitable for a process for the production of an ethylene copolymer in which ethylene and $C_3$-$C_{20}$-alpha olefin monomers are copolymerized in the presence of the catalyst composition of the invention.

Preferably, in the process an ethylene copolymer is produced, more preferably, ethylene monomers are copolymerized with one or more alpha-olefin comonomers units.

The alpha-olefin comonomer units of polyethylene resins preferably are selected from $C_3$-$C_{20}$-alpha-olefins, more preferably are selected from $C_3$-$C_{12}$-alpha-olefins, still more preferably are selected from $C_4$-$C_{10}$-alpha-olefins, such as 1-butene, isobutene, 1-pentene, 1-hexene, 4-methyl-1-pentene, 1-heptene, 1-octene, 1-nonene, 1-decene and 1-eicosene, as well as dienes, such as butadiene, 1,7-octadiene and 1,4-hexadiene, or cyclic olefins, such as norbornene, and any mixtures thereof.

Most preferably, the comonomer is 1-butene and/or 1-hexene.

The comonomer content of the ethylene copolymers can vary in wide ranges depending on the desired polymer properties. One benefit of the present invention is that due to the improved comonomer distribution reasonably high comonomer contents are possible without affecting some other properties, like XS. Thus, the comonomer content can vary from very low levels, as example from below 0.1 wt% up to very high amounts, like at least up to 30 wt% or above. In addition, polymer with wide range of MFR can be produced, e.g. from $MFR_2$ from 0.1 to 2000 g/10 min to $MFR_{21}$ from 0.01 to 100 g/10 min. (190 °C, 2.16 and 21 kg load, respectively).

The catalyst systems hereinbefore described are according to the invention employed in a one-stage or multistage, preferably two-stage polymerization. In such a multi-stage polymerization the reactors are preferably connected in series such that the products of one reactor are used as the starting material in the next reactor.

The polymerization reactions used in each stage may involve conventional ethylene homopolymerization or copolymerization reactions, e.g. gas phase, slurry phase, liquid phase polymerizations, using conventional reactors, e.g. loop reactors, gas phase reactors, batch reactors, e.t.c..

The polymerization may be carried out continuously or batch wise, preferably the polymerization is carried out continuously.

The polyethylene copolymer can further show unimodal, bimodal or multimodal molecular weight distribution.

Unimodal polymers can be produced in a one stage polymerization, although more then one stage is possible, but then polymers with approximately the same molecular weight are produced in each stage. Any type of polymerizations as listed above is possible.

Bimodal or multimodal polyethylene copolymers can be produced in dual or multi-stage and - reactor processes which are known in the art.

Different combinations for producing multimodal polymers can be used, e.g. gas-gas phase, slurry-slurry phase, slurry-gas phase processes; slurry-gas phase polymerization being a preferred one.

Multimodal polymers with respect to the molecular weight distribution (MWD) are produced in a multistage process, where lower molecular weight and higher molecular weight polymers (components) are produced in different polymerization steps, in any order.

If the lower molecular weight component is produced in the first stage and the higher molecular weight component thus being produced in the second step, this is called normal mode.

On the contrary, if the lower molecular weight component is produced in the second stage and the higher molecular weight component thus being produced in the first step, this is called reverse mode.

Preferably the process according to the invention is run in the normal mode.

More preferably the production of the lower molecular weight and higher molecular weight components is carried out as a combination of slurry polymerization for the lower molecular weight component and gas phase polymerization for the higher molecular component.

Thus the first stage is carried out in the slurry phase and produces preferably the lower molecular weight component. The second stage can be carried out in a gas phase or in a slurry phase, but is preferably carried out in the gas phase. Preferably the second stage produces the higher molecular weight component. In a preferred polymerization process one slurry phase stage is followed by one gas phase stage.

The slurry and gas stages may be carried out using any conventional reactors known in the art. A slurry phase polymerization may, for example, be carried out in a continuously stirred tank reactor; a batch-wise operating stirred tank reactor or a loop reactor. Preferably slurry phase polymerization is carried out in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerization step is a fluidized bed reactor.

Optionally the process according to the invention can comprise one or two additional polymerization steps.

These optional one or two additional polymerization steps preferably comprise gas phase polymerization steps.

The reactor system may additionally comprise other reactors, e.g. for pre-polymerization. Pre-polymerization may be used, for example, to provide the catalyst in a solid particulate form or to activate the catalyst. In a typical pre-polymerization, monomer (e.g. ethylene) is polymerized with the catalyst system, as hereinbefore described, to yield, for example, 0.1 to 1000 g polymer per gram of catalyst. The polymer formed during pre-polymerization forms less than 10 % by weight, preferably less than 7 % by weight, typically less than 5 % by weight of the total weight of the final polymer. Still more preferably only 2-3 % of the total weight of the polymer is formed during any pre-polymerization step. A pre-polymerization is therefore not intended to represent one of the stages of the polymerization processes hereinbefore described.

A preferred multistage process for producing ethylene (co)polymers is a "loop-gas phase"-process, such as developed by Borealis (known as BORSTAR® technology) described e.g. in patent literature, such as in EP 0 517 868, EP 0 887 379.

For slurry reactors the polymerization medium typically comprises ethylene, optionally a comonomer, a diluent and a catalyst system as hereinbefore described. The diluent used will generally be an aliphatic hydrocarbon having a boiling point in the range -70 to +100 °C. Preferred diluents include hydrocarbons such as propane, n-butane or isobutane, with propane as particularly preferred. Hydrogen is also preferably fed into the reactor to function as a molecular weight regulator. In a typical slurry phase polymerization the temperature is preferably in the range 40 to 110 °C, preferably 60 to 100 °C and in particular 85 to 100°C. The reaction pressure is typically 10 to 150 bar, preferably 15 to 100 bar.

In some cases it may be preferred to conduct the polymerization at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture. When propane is used as a diluent an example of a suitable operating temperature is 95 °C and pressure 60 bar when employing supercritical conditions.

Polymerization in the first reactor (e.g. a loop reactor) is typically carried out for 10 to 300 minutes, preferably 20 to 120 minutes and the most preferably 30 to 90 minutes.

At least part of the volatile components of the reaction medium (e.g. hydrogen) may then be removed. The product stream is then subjected to a second polymerization stage.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

The second polymerization is preferably carried out using the same catalyst system as hereinbefore described in the first stage (i.e. no fresh catalyst is added in the second stage).

In the second polymerization stage for producing bimodal polyethylene copolymer preferably the higher molecular weight component of the polyethylene copolymer is produced. The second stage is preferably carried out in the gas phase. The polymer produced in the second stage is preferably a copolymer.

As gas phase reactors preferably fluidized bed gas phase reactors, fast fluidized bed gas phase reactors or settled bed gas phase reactors can be used.

Ad fluidized bed gas phase reactors:

In a fluidized bed gas phase reactor an olefin is polymerized in the presence of a polymerization catalyst in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer (s), eventual chain growth controllers or chain transfer agents, such as hydrogen, and eventual inert gas.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are know by using common engineering practise. An overview is given, among others in Geldart: Gas Fluidization Technology, J.Wiley & Sons, 1986.

The reactor may also include a mechanical agitator to further facilitate mixing within the fluidized bed. An example of suitable agitator design is given in EP-A-707513.

Ad fast fluidized bed reactor:

In such a reactor the velocity of the fluidization gas exceeds the onset velocity of pneumatic transport. Then the whole bed is carried by the fluidization gas. The gas transports the polymer particles to a separation device, such as cyclone, where the gas is separated from the polymer particles.

Ad settled bed reactor:

In the settled bed the polymer flows downward in a plug flow manner in an environment containing reactive components in gaseous phase. The polymer powder is introduced into the bed from the top from where it flows downwards due to gravity.

Polymerization in settled bed is disclosed, among others, in EP-A-1633466, EP-A-1484343 and WO-A-97/04015.

In the process according to the invention preferably a fluidized bed gas phase reactors is used for the second polymerization step.

For gas phase reactors used according to the invention, the reaction temperature used will generally be in the range 60 to 115 °C (e.g. 70 to 110 °C), the reactor pressure will generally be in the range 10 to 30 bar, and the residence time will generally be 0.5 to 8 hours. Preferably the residence time in the gas phase reactor is 1 to 4 hours, more preferably 1.5 to 3 hours.

The polymerization medium in the second stage typically comprises ethylene, comonomers (e.g. 1-butene, 1-hexene, or octene), nitrogen, propane and optionally hydrogen.

If the polymerization process comprises one or two additional polymerization steps, these steps are preferably performed in gas phase reactors, as described above.

Any combination of gas phase reactors can be used.

For example, the polymerization product of the second polymerization step, which is either a fluidized bed polymerization step or a fast fluidized bed polymerization step, preferably a fluidized bed polymerization step is transferred into a third polymerization reactor, which is for example a settled bed polymerization reactor. The product from the third polymerization step is optionally transferred into a fourth reaction step, which uses for example again a fluidized bed polymerization reactor. From the fourth reaction reactor the polymer is recovered and sent to further processing.

The use of two or three subsequent fluidized bed polymerization reactors is a further possibility.

In any embodiment it is possible to feed additional procatalyst into any of the reaction zones respectively polymerization step. However, it is preferred that the solid procatalyst is introduced into the prepolymerization step only and that no fresh solid procatalyst is added into any reaction zone respectively polymerization step. Thus, the solid procatalyst entering a polymerization step comes from the preceding polymerization step(s) only. However, additional cocatalyst can be introduced into the reaction stages if necessary. This may be done, for instance, to increase the activity of the catalyst or to influence the isotacticity of the polymer.

Generally the quantity of catalyst composition used depends upon the nature of the catalyst composition, the reactor types and conditions and the properties desired for the polymer product.

The melt flow rate and the density as well as the molecular weight of the resulting ethylene copolymers can be controlled independently over wide ranges.

The advantage of using the catalyst system of the invention becomes especially apparent when producing linear low density ethylene polymers, having a density of from about 900 to 935 kg/m$^3$, preferably from 900 to 930 kg/m$^3$, which is more or less constant in the course of the polymerization.

With the catalyst composition according to the present invention it is possible to yield ethylene copolymer compositions which preferably comprise a molecular weight of from 20 000 to 1 200 000 g/mol which is more or less constant in the course of the polymerization and a comonomer content of from 1 to 16 w-%, which is more or less constant in the course of the polymerization.

**Definitions and Measurement Methods**

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer and the molecular weight. The MFR is determined at 190°C for polyethylene. It may be determined at different loadings such as 2.16 kg ($MFR_2$), 5 kg ($MFR_5$) or 21.6 kg ($MFR_{21}$).

**GPC: Molecular weight averages, molecular weight distribution, and polydispersity index (Mn, Mw, MWD, PDI)**

Molecular weight averages (Mw, Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99. A Waters GPCV2000 instrument, equipped with differential refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert butyl-4-methyl-phenol) as solvent at 140 °C and at a constant flow rate of 1 mL/min. 209.5 μL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants for PS, PE and PP used are as per ASTM D 6474-99. All samples were prepared by dissolving 0.5 - 4.0 mg of polymer in 4 mL (at 140 °C) of stabilized TCB (same as mobile phase) and keeping for max. 3 hours at max. 160 °C with continuous gentle shaking prior sampling in into the GPC instrument.

**Density** was determined according to ISO 1183 on compression-moulded specimens.

**Bulk density** was determined according to ASTM D1895-96, method A, by filling a container with known volume (100ml) with polymer powder and measuring the weight of polymer. Bulk density is calculated as $kgPE/m^3$.

**Comonomer content** of the obtained products was measured in a known manner based on Fourier transform infrared spectroscopy (FTIR) calibrated with $^{13}C$-NMR, using Nicolet Magna 550 IR spectrometer together with Nicolet Omnic FTIR software.

Films having a thickness of about 220 to 250 μm were compression moulded from the samples. Similar films were made from calibration samples having a known content of the comonomer. The thicknesses were measured from at least five points of the film. The films were then rubbed with sandpaper to eliminate reflections. The films were not touched by plain hand to avoid contamination. For each sample and calibration sample at least two films were prepared. The films were pressed from pellets by using a Graceby Specac film press at 150 °C using 3 + 2 minutes preheating time, 1 minute compression time and 4 to 5 minutes cooling time. For very high molecular weight samples the preheating time may be prolonged or the temperature increased.

The comonomer content was determined from the absorbance at the wave number of approximately 1378 $cm^{-1}$. The comonomer used in the calibration samples was the same as the comonomer present in the samples. The analysis was performed by using the resolution of 2 $cm^{-1}$, wave number span of from 4000 to 400 $cm^{-1}$ and the number of sweeps of 128. At least two spectra were run from each film.

The comonomer content was determined from the spectrum from the wave number range of from 1430 to 1100 $cm^{-1}$. The absorbance is measured as the height of the peak by selecting the so-called short or long base line or both. The short base line is drawn in about 1410 - 1320 $cm^{-1}$ through the minimum points and the long base line about between 1410 and 1220 $cm^{-1}$. Calibrations need to be done specifically for each base line type. Also, the comonomer content of the unknown sample needs to be within the range of the comonomer contents of the calibration samples.

**Elemental analysis of the catalysts**

The elemental analysis of the catalysts was performed by taking a solid sample of mass, M, cooling over dry ice. Samples were diluted up to a known volume, Vol, by dissolving in nitric acid ($HNO_3$, 65 %, 5 % of Vol) and freshly deionised (DI) water (95 % of Vol), the samples were left to stabilize for two hours. The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$ in DI water), a low standard (10 ppm Al in a solution of 5 % HN03 in DI water, a high standard (100 ppm Mg, 50 ppm Al, 50 ppm Ti in a solution of 5 % $HNO_3$ in DI water) and a quality control sample (50 ppm Mg, 20 ppm Al, 20 ppm Ti and in a solution of 5 % $HNO_3$ in DI water).

The content of aluminium was monitored via the 167.081 nm line, when Al concentration in ICP sample was between 0-10 ppm and via the 396.152 nm line for Al concentrations between 10-100 ppm. The magnesium concentration was monitored via the 285.213 nm line and the titanium content via the 323.452 nm line.

The reported values, required to be between 0 and 100, or further dilution is required, are an average of three successive aliquots taken from the same sample and are related back to the original catalyst using equation 1.

$$C = (R \times Vol)/M \qquad \text{Equation 1}$$

Where: C is the concentration in ppm, related to % content by a factor of 10,000, R is the reported value from the ICP-AES, Vol is the total volume of dilution in ml, M is the original mass of sample in g.

If dilution was required then this also needs to be taken into account by multiplication of C by then dilution factor.

**Chloride** was determined after dissolution in dilute sulphuric acid by potentiometric titration with a standard silver nitrate solution.

**Examples:**

**1. Preparation of the Catalyst**

a) Preparation of Mg complex

87 kg of toluene was added into a multi purpose reactor. Then 45.5 kg Bomag A (20% solution in heptane) were added to the reactor. 161 kg 99.8 % 2-ethyl-1-hexanol (2-EHA) were then introduced into the reactor at a flow rate of 24-40 kg/h. 2-EHA had been earlier dried with molecular sieves. The reaction temperature was kept below 38°C. The solution was mixed for 30 minutes and cooled to room temperature.

The molar ratio between BOMAG-A and 2-ethyl-1-hexanol was 1:1.83.

b) Solid catalyst component preparation:

275 kg silica (ES747JR of Crossfield, having average particle size of 20 $\mu$m) activated at 600°C in nitrogen were charged into a catalyst preparation reactor. Then 411 kg 20 % EADC (2.0 mmol/g silica) diluted in 555 litres pentane were added into the reactor at ambient temperature during one hour. The temperature was then increased to 35°C while stirring the treated silica for one hour. The silica was dried at 50°C for 8.5 hours. Then 655 kg of the complex prepared as described above (2 mmol Mg/g silica) were added at 23°C during ten minutes. 86 kg pentane were added into the reactor at 22°C during ten minutes. The slurry was stirred for 8 hours at 50°C. Finally 52 kg $TiCl_4$ were added during 0.5 hours at 45°C. The slurry was stirred at 40°C for five hours. The catalyst was then dried by purging with nitrogen.

Catalyst composition was: 3.1wt% of Al, 2.3wt% of Mg, 2.3wt% of Ti and 14.1 wt% of Cl.

**2. Copolymerization of ethylene and 1-butene**

Polymerizations were carried out in 3 l stainless steel autoclave reactor equipped with a stirrer and continuous supply of ethylene.

1800 ml of i-butane were added into the reactor at room temperature as reaction medium. The temperature was then increased to 85°C. The procatalyst and the co-catalyst were fed into the reactor by means of two feed vessels that were connected in line to the reactor lid. About 75 - 100 mg of the procatalyst was added into the upper feed vessel together with 10 ml (6.3 g, 87 mmol) of pentane. An appropriate amount of the co-catalyst, i.e. TEAL, 1:1 mixture of TEAL/EADC or DEAC was added to the lower feed vessel. An Al/Ti molar ratio of 15 was used in the co-polymerization with TEA and with the mixed co-catalyst and about 30 with the DEAC co-catalyst. The co-catalyst was first let into the reactor and the procatalyst was after that introduced by pressurising the upper feed vessel to 30 bar with $N_2$ and there after letting the over pressure push in the catalyst in to the reactor. This manoeuvre was done three times. Two additional feed vessels were connected in series between the lid of the reactor and the ethylene monomer feed line. 150 ml (89.3 g, 1.59 mol) of butene ($C_4$") co-monomer were introduced into the lower feed vessel. 2 bar of $H_2$ pressure was added to the upper 500 ml feed vessel (44.6 mmol). The polymerization was started by opening the monomer feed line and thereby introducing both the co-monomer and the $H_2$ together with the ethylene monomer. Partial pressure of added ethylene was varied pending on the amount of hydrogen added. A pressure of about 22.5 bar was maintained by the ethylene feed trough out the test polymerization. The co-polymerization was carried out at 85°C. The co-polymerization was continued for 15, 30 respectively 37, 60 or 90 or even 165 min. The polymerization was stopped by venting off the monomer and the iso-butane.

**3. Polymerization Results and Polymer Analysis**

MFR and bulk density were measured from the co-polymers. Mw, Mn and PDI were measured by GPC and the $C_4$" % in the co-polymerwas measured by IR as disclosed above. In addition the density was measured from all the co-polymers using known methods.

Table 1 shows the butene-co-polymerization results with the procatalyst prepared as described under point 1a) and 1b) in a time test series with TEAL or a 1:1 TEAL/EADC mixture as co-catalyst.

Table 1:

| time | 15mins. | 37min. | 60mins. | 15mins. | 30min | 60mins. | 90min |
|---|---|---|---|---|---|---|---|
| Cocatalyst | TEAL | TEAL | TEAL | TEAL/EADC | TEAL/EADC | TEAL/EADC | TEAL/EADC |
| MFR(21) | 101.7 | 46.1 | 28.8 | 2.6 | 2 | 4.6 | 2.4 |
| BD, kg/m$^3$ | sticky | sticky | sticky | 260 | 345 | 390 | 390 |
| C$_4$" Cont., wt% | 9 | 6.7 | 6.5 | 6.6 | 5.6 | 5.2 | 4.8 |
| GPC Mw | 93 000 | 111 000 | 127 000 | 229 000 | 246 000 | 191 000 | 223 000 |
| GPC Mn | 20 900 | 29 200 | 32 800 | 67 500 | 75 400 | 56 600 | 69 300 |
| PDI | 4,5 | 3.8 | 3,9 | 3.4 | 3.3 | 3.4 | 3.2 |
| Density kg/m$^3$ | 916.8 | 921.5 | 922.4 | 915.7 | 916.1 | 918.7 | 918 |

The results from Table 1 showed that a substantially higher Mw and Mn could be achieved when using the mixed TEA/EADC co-catalyst compared to using the TEA co-catalyst alone. The Mw became the double, from 110 000 g/mol to about 220 000 g/mol. The MFR results confirmed the change in Mw as the MFR values were about ten times higher when using the TEA co-catalyst compared to when using the mixed TEA/EADC co-catalyst. In addition there was almost no change in the Mw and Mn values in respect of time when using the mixed TEA/EADC co-catalyst.

All the copolymers produced with the TEA co-catalyst were sticky, so sticky indeed that bulk density measurements became uncertain. Contrary to this, none of the copolymers produced either with the TEA/EADC mixed co-catalyst or with the DEAC co-catalyst were sticky. These polymers showed a quite good bulk density of 390 kg/m$^3$.

Comonomer incorporation and density:

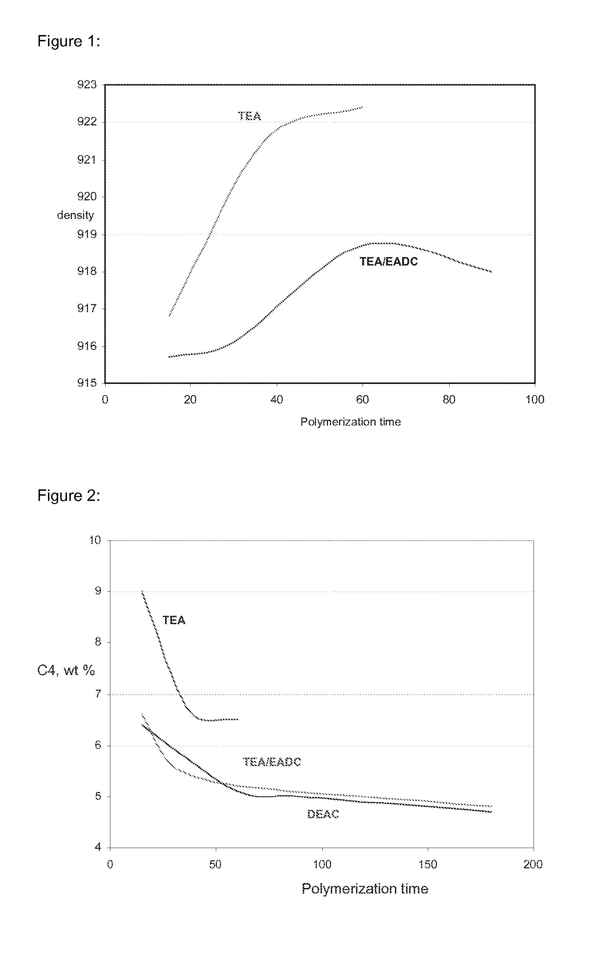

The results in Table 1 show that there was only a slight decrease in co-monomer incorporation by time when using the mixed co-catalyst, namely from 6,6 % down to 4,8 % in 90 min, and a corresponding increase in density from 915,7 kg/m$^3$ to 918 kg/m$^3$. That is an increase in density of 2,3 kg/m$^3$. The corresponding changes, when using the TEA co-catalyst are from 9 % down to 6,5 % in 60 min, and a corresponding increase in density from 916,8 kg/m$^3$ to 922,4 kg/m$^3$. That is an increase in density of 5,6 kg/m$^3$. The results show thereby, that there was a density drift by time when using the TEA co-catalyst that is over double as fast as when using a mixed co-catalyst (see also Figure 1).

In Table 2 the results from the co-polymerizations with DEAC as co-catalyst are shown.

Table 2

| Cocatalyst DEAC | | | | |
|---|---|---|---|---|
| Polymerization time | 15mins. | 60mins. | 90mins. | 180mins. |
| MFR(21) | 2.3 | 2.3 | 2.8 | 2.4 |
| BD, kg/m3 | 310 | 435 | 445 | 475 |
| 1-butene.. Cont., w-% | 6.4 | 5.1 | 5 | 4,7 |
| GPC Mw | 235 000 | 226 000 | 222 000 | |
| GPC Mn | 70 500 | 72 200 | 68 100 | |
| PDI | 3,3 | 3,1 | 3,1 | |
| Density, kg/m3 | 916.1 | 917.6 | 917.4 | 919.3 |

The Mw and Mn results from the copolymers achieved with the DEAC co-catalyst shown in Table 2 are in total agreement with the results achieved with the mixed TEA/EADC co-catalyst. Mw and Mn were roughly twice as big compared to the values achieved from co-polymers created with the TEA co-catalyst. No "time drift" in Mw nor in Mn could be seen. PDI was narrow, being between 3,3 - 3,2 with only a slightly decreasing trend by time.

Co-monomer incorporation and density:

The co-monomer incorporation results from the copolymers produced with the DEAC co-catalyst shown in Table 2 are in total agreement with the results achieved with the mixed TEA/EADC co-catalyst. Both result series started at about 6.5 % in a 15 min run and showed only a slight decrease by time so that in a 90 min run about 5 % of co-monomer is still incorporated (Figure 2).

**Claims**

1. Ziegler-Natta catalyst composition for the production of ethylene copolymers comprising

    A) a procatalyst, which procatalyst comprises

        a) an Al compound having the formula $Al(alkyl)_xCl_{3-x}$ (I), where alkyl is an alkyl group with 1 to 12 and $0 \leq x \leq 3$,
        b) a magnesium hydrocarbyloxy compound of formula $Mg(OR^1)_{2-n}(R^2)_n$ (II), wherein each $R^1$ and $R^2$ is independently a $C_{1-20}$ hydrocarbon residue which may optionally be substituted with halogen and $0 \leq n < 2$ and
        c) a chlorine-containing titanium compound of the formula $Cl_yTi(OR^3)_{4-y}$ (III), wherein $R^3$ is a $C_{2-20}$ hydrocarbon residue and y is 1, 2, 3 or 4,

    with compounds a), b) and c) being supported on a particulate inorganic carrier and
    B) a halogenated aluminium alkyl cocatalyst of the formula (IV) $(C_1-C_4\text{-alkyl})_m\text{-Al-X}_{3-m}$,
    wherein X is chlorine, bromine, iodine or fluorine and m is 1 or 2,
    whereby the composition shows a reduced change of comonomer response with polymerization time compared to compositions using non-halogenated cocatalysts.

2. Ziegler-Natta catalyst composition for the production of ethylene copolymers according to claim 1, whereby the composition shows a reduced change of molecular weight with polymerization time compared to compositions using non-halogenated cocatalysts.

3. The Ziegler-Natta catalyst composition according to claim 1 or 2 wherein the halogenated aluminium alkyl cocatalyst of the formula (IV) is selected from the group consisting of dimethyl aluminium chloride, diethyl aluminium chloride, diisobutyl aluminium chloride, ethyl aluminium dichloride and methyl aluminium dichloride.

4. The Ziegler-Natta catalyst composition according to claim 3 wherein ethyl aluminium dichloride or diethyl aluminium chloride are used alone as cocatalyst or in combination with triethyl aluminium in a molar ratio for halogenated aluminium alkyl:TEAL is from 10: 90 to 90:10.

5. The Ziegler-Natta catalyst composition according to any of preceding claims 1 to 4 wherein the procatalyst is obtainable by

    - contacting said inorganic support with the alkyl aluminium chloride a) to give a first reaction product,
    - contacting said first reaction product with the magnesium complex b) to give a second reaction product and
    - contacting said second reaction product with the titanium compound c) to give said procatalyst.

6. The Ziegler-Natta catalyst composition according to any of preceding claims 1 to 4 wherein the procatalyst is obtainable by

    - reacting the magnesium complex b) with the alkyl aluminium chloride a) in a non polar hydrocarbon solvent in which said magnesium complex is soluble to produce a first solution
    - contacting said first solution with the titanium compound c) to produce a second solution and
    - contacting said second solution with said inorganic support to give said procatalyst.

7. The Ziegler-Natta catalyst composition according to any of claims 1 or 6 wherein the procatalyst is composed of ethyl aluminium dichloride as catalyst component a), a magnesium complex b) prepared by reacting butyl octyl magnesium and 2-ethyl-1-hexanol, and titanium tetrachloride as component c), which are deposited on a silica support.

8. Use of a Ziegler-Natta catalyst composition according to any of claims 1 or 7 in a process for the polymerization of ethylene with $C_3$-$C_{20}$ olefins.

9. Use of a Ziegler-Natta catalyst composition according to claim 8 in a process for the polymerization of ethylene with 1-butene and/or 1-hexene.

10. Use of a Ziegler-Natta catalyst composition according to any of claims 1 or 7 for producing linear low density ethylene polymers, having a density of from 900 to 935 kg/m$^3$.

Figure 1:

Figure 2:

**EP 2 246 368 A1**

Europäisches
Patentamt

European
Patent Office

Office européen
des brevets

# EUROPEAN SEARCH REPORT

Application Number

EP 09 15 9141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 155 078 A (KIOKA MAMORU [JP] ET AL) 13 October 1992 (1992-10-13) <br> * examples 1-5,9; table 1 * <br> * examples 11-14; table 2 * <br> * examples 15-18; table 3 * <br> * examples 20-23; table 4 * <br> * example 26; table 5 * <br> * examples 28-30,34; table 6 * | 1-4,8-10 | INV. <br> C08F4/655 <br> C08F210/16 |
| Y | * claims 1-10 * | 1,5,6 | |
| X | US 4 558 025 A (BEST STEVEN A [US]) 10 December 1985 (1985-12-10) <br> * column 9, line 46 - line 48 * <br> * examples 1-6; table I * <br> * claims 1-36 * | 1-3,8-10 | |
| X | EP 1 057 834 A (UNION CARBIDE CHEM PLASTIC [US]) 6 December 2000 (2000-12-06) <br> * examples 1-8 * <br> * claims 1,3,4,6,8,9 * <br> * paragraph [0016] - paragraph [0021] * <br> * paragraph [0026] * | 1-3,8-10 | TECHNICAL FIELDS SEARCHED (IPC) <br><br> C08F |
| X | US 4 492 768 A (HAWLEY GIL R [US]) 8 January 1985 (1985-01-08) <br> * example IV * <br> * claims 1-4,11 * <br> * column 4, line 15 - line 21 * <br> * column 5, line 53 - line 64 * | 1-4,8 | |

-/--

The present search report has been drawn up for all claims

| Place of search | Date of completion of the search | Examiner |
|---|---|---|
| Munich | 21 September 2009 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

Europäisches
Patentamt
European
Patent Office
Office européen
des brevets

# EUROPEAN SEARCH REPORT

Application Number

EP 09 15 9141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2009/076733 A (BRASKEM S A [BR]; DO NASCIMENTO ALAN KARDEC [BR]; ROCHA ETIENNE MARCOS) 25 June 2009 (2009-06-25) <br> * page 16, line 8 - page 18, line 12 * <br> * page 19, line 14 - line 22 * <br> * page 20, line 19 - page 21, line 21 * <br> * page 24, line 19 - page 27, line 7; table 2 * <br> * claims 1-4,12,17,18,24-28 * <br> ----- | 1-4,8-10 | |
| A | US 5 777 050 A (FRIEDERICHS NICOLAAS H [NL] ET AL) 7 July 1998 (1998-07-07) | 1-10 | |
| Y | * examples I,XIII * <br> ----- | 1,6 | |
| A | EP 2 003 151 A (NOVA CHEMICALS CORP [CA]; INEOS EUROPE LTD [GB]) 17 December 2008 (2008-12-17) | 1-10 | |
| Y | * examples 1-19 * <br> * claims 1,2,7,10,11,20-23 * <br> ----- | 1,5 | |
| A | EP 2 030 991 A (BOREALIS TECH OY [FI]) 4 March 2009 (2009-03-04) <br> * paragraph [0102] - paragraph [0103] * <br> * page 14 - page 15; example 1 * <br> * claims 2,4-8,12,13,18,21-23 * <br> ----- | 1-10 | TECHNICAL FIELDS SEARCHED (IPC) |

The present search report has been drawn up for all claims

| Place of search | Date of completion of the search | Examiner |
|---|---|---|
| Munich | 21 September 2009 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 246 368 A1**

## ANNEX TO THE EUROPEAN SEARCH REPORT
## ON EUROPEAN PATENT APPLICATION NO.

EP 09 15 9141

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2009

| Patent document cited in search report | | Publication date | Patent family member(s) | | Publication date |
|---|---|---|---|---|---|
| US 5155078 | A | 13-10-1992 | CA | 1335094 C | 04-04-1995 |
| | | | EP | 0408750 A1 | 23-01-1991 |
| | | | WO | 8910942 A1 | 16-11-1989 |
| US 4558025 | A | 10-12-1985 | AU | 588160 B2 | 07-09-1989 |
| | | | AU | 4578185 A | 13-02-1986 |
| | | | CA | 1248509 A1 | 10-01-1989 |
| | | | DE | 3569545 D1 | 24-05-1989 |
| | | | EP | 0174102 A1 | 12-03-1986 |
| | | | JP | 61087705 A | 06-05-1986 |
| EP 1057834 | A | 06-12-2000 | AT | 321790 T | 15-04-2006 |
| | | | AU | 3647300 A | 07-12-2000 |
| | | | BR | 0002576 A | 02-01-2001 |
| | | | CA | 2311115 A1 | 04-12-2000 |
| | | | DE | 60026935 T2 | 30-11-2006 |
| | | | ES | 2261153 T3 | 16-11-2006 |
| | | | JP | 3684324 B2 | 17-08-2005 |
| | | | JP | 2001019707 A | 23-01-2001 |
| | | | US | 6187866 B1 | 13-02-2001 |
| US 4492768 | A | 08-01-1985 | CA | 1222504 A1 | 02-06-1987 |
| | | | DE | 3482184 D1 | 13-06-1990 |
| | | | EP | 0139969 A2 | 08-05-1985 |
| | | | JP | 1919636 C | 07-04-1995 |
| | | | JP | 6049731 B | 29-06-1994 |
| | | | JP | 60099107 A | 03-06-1985 |
| | | | SG | 3591 G | 05-04-1991 |
| WO 2009076733 | A | 25-06-2009 | US | 2009163679 A1 | 25-06-2009 |
| US 5777050 | A | 07-07-1998 | NONE | | |
| EP 2003151 | A | 17-12-2008 | CA | 2633381 A1 | 15-12-2008 |
| | | | US | 2008312391 A1 | 18-12-2008 |
| EP 2030991 | A | 04-03-2009 | WO | 2009027379 A1 | 05-03-2009 |

EPO FORM P0459

For more details about this annex : see Official Journal of the European Patent Office, No. 12/82

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4218339 A
- EP 0155682 A
- WO 03055921 A
- EP 0435557 A
- WO 2004050722 A
- WO 9525758 A
- EP 0688794 A
- EP 0835887 A
- WO 0155230 A
- US 4582816 A
- US 3405109 A
- US 3324093 A
- EP 479186 A
- US 5391654 A

- EP 0517868 A
- EP 0887379 A
- US 3374211 A
- US 3242150 A
- EP 1310295 A
- EP 891990 A
- EP 1415999 A
- EP 1591460 A
- EP 1860125 A
- EP 707513 A
- EP 1633466 A
- EP 1484343 A
- WO 9704015 A

**Non-patent literature cited in the description**

- **Geldart.** Gas Fluidization Technology. J.Wiley & Sons, 1986